(19) Europäisches Patentamt
European Patent Office
Office européen des brevets

(11) **EP 3 183 770 B1**

(12) **FASCICULE DE BREVET EUROPEEN**

(45) Date de publication et mention de la délivrance du brevet:
**18.07.2018 Bulletin 2018/29**

(21) Numéro de dépôt: **15759904.4**

(22) Date de dépôt: **17.08.2015**

(51) Int Cl.:
*H01M 14/00* (2006.01)    *C25B 1/04* (2006.01)
*C25B 9/06* (2006.01)    *C25B 11/04* (2006.01)
*C25B 5/00* (2006.01)

(86) Numéro de dépôt international:
**PCT/FR2015/052215**

(87) Numéro de publication internationale:
**WO 2016/027031 (25.02.2016 Gazette 2016/08)**

(54) **DISPOSITIF ÉLECTROCHIMIQUE POUR LE STOCKAGE DE L'ÉNERGIE ÉLECTRIQUE ET LA PRODUCTION D'HYDROGÈNE, ET PROCÉDÉ DE PRODUCTION D'HYDROGÈNE**

**ELEKTROCHEMISCHE VORRICHTUNG ZUM SPEICHERN VON ELEKTRISCHER ENERGIE UND ZUR ERZEUGUNG VON WASSERSTOFF UND VERFAHREN ZUR HERSTELLUNG VON WASSERSTOFF**

**ELECTROCHEMICAL DEVICE FOR STORING ELECTRICAL ENERGY AND PRODUCING HYDROGEN, AND METHOD FOR PRODUCING HYDROGEN**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats de validation désignés:
**MA**

(30) Priorité: **19.08.2014 FR 1457875**

(43) Date de publication de la demande:
**28.06.2017 Bulletin 2017/26**

(73) Titulaire: **Jomi Leman**
**74890 Fessy (FR)**

(72) Inventeurs:
• **JEHAN, Michel**
**F-74890 Fessy (FR)**
• **BRIFFOD, Jean-Paul**
**F-74380 Lucinges (FR)**

(74) Mandataire: **Talbot, Alexandre et al**
**Cabinet Hecké**
**28 Cours Jean Jaurès**
**38000 Grenoble (FR)**

(56) Documents cités:
**WO-A1-2013/086508    WO-A2-2004/076721**
**FR-A1- 2 431 767    US-A- 4 271 003**
**US-A1- 2010 213 052**

## Description

### Domaine technique de l'invention

L'invention est relative à un dispositif électrochimique pour le stockage de l'énergie électrique et pour la production d'hydrogène et à un procédé de production d'hydrogène.

### État de la technique

Le stockage massif de l'énergie électrique présente des enjeux considérables. Il est, en effet, essentiel d'avoir des unités de stockage pouvant fonctionner dans une très large gamme de puissance et de capacité tout en privilégiant les aspects volumiques réduits.

Une voie prometteuse pour stocker de telles énergies est la voie électrochimique. Aujourd'hui, la technologie électrochimique la plus performante et la plus sure est celle de l'électrolyse des métaux non ferreux en milieu aqueux et, plus particulièrement, l'électrolyse des métaux qui ont un grand contenu énergétique tels que le zinc ou le manganèse.

De plus, la technologie est simple et bon marché : il serait donc intéressant de pouvoir faire fonctionner une telle électrolyse de façon réversible.

La demande WO 2011/015723 décrit un procédé de co-génération simultanée d'énergie électrique et d'hydrogène par voie totalement électrochimique. Le procédé comporte une phase de stockage d'électricité par électrolyse d'une solution d'un métal électrolysable et formation d'une pile métal électrolysable-hydrogène et, une phase de récupération d'électricité et génération d'hydrogène par fonctionnement de ladite pile.

Cependant, dans de tels dispositifs, les volumes des réacteurs sont très importants pour pouvoir fournir une grande quantité d'énergie électrique.

De plus, pour des applications de puissance importante, les dépôts métalliques sont souvent inhomogènes, ce qui réduit les performances électrochimiques des dispositifs, voire provoque les mises en court circuit des électrodes par formation de dendrites métalliques.

### Objet de l'invention

L'invention a pour but de remédier aux inconvénients de l'art antérieur et, en particulier, de proposer un dispositif permettant de stocker une grande quantité d'énergie électrique.

On tend vers cet objet par les revendications annexées.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :

- la figure 1 représente une vue schématique, et en coupe, un réacteur d'un dispositif électrochimique, selon un mode de réalisation de l'invention,
- la figure 2 représente schématiquement, en vue de dessus, un empilement d'électrodes d'un réacteur d'un dispositif électrochimique, selon l'invention,
- la figure 3 représente une vue schématique, et en coupe, un réacteur d'un dispositif électrochimique, selon un autre mode de réalisation de l'invention,
- la figure 4 représente schématiquement, en vue de dessus, un dispositif électrochimique comprenant plusieurs réacteurs, selon un autre mode de réalisation de l'invention,
- la figure 5 représente schématiquement un couplage électrique de deux réacteurs, selon un mode de réalisation de l'invention.

### Description d'un mode de réalisation préférentiel de l'invention

L'invention est relative à un dispositif électrochimique pour le stockage de l'énergie électrique de façon directe et réversible.

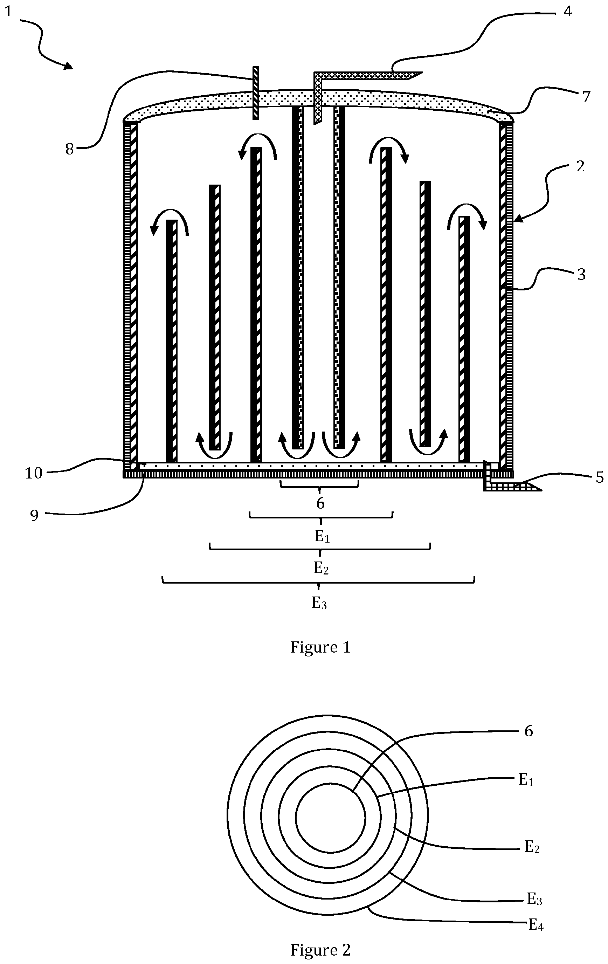

Comme représenté à la figure 1, le dispositif électrochimique 1, réversible, configuré pour le stockage de l'énergie électrique et pour la production de l'hydrogène, comprend :

- un réacteur 2, la paroi du réacteur formant, avantageusement, une première électrode 3,
  le réacteur 2 étant pourvu d'une entrée d'électrolyte 4 et d'une sortie d'électrolyte 5,
- une électrode centrale 6 disposée au centre du réacteur 2, l'électrode centrale 6 étant sensiblement parallèle à la paroi du réacteur 2,
- des électrodes additionnelles $E_x$, avec x un entier allant de 1 à n,

les électrodes additionnelles $E_x$ étant tubulaires et disposées autour de l'électrode centrale 6.

L'électrode centrale 6 est, préférentiellement, tubulaire. Par tubulaire, on entend que l'électrode a une section fermée de préférence de forme cylindrique ou ovoïde. Avantageusement, l'électrode est creuse de manière à permettre le passage de l'électrolyte.

Dans un mode de fonctionnement, l'électrode centrale 6 forme l'anode du dispositif électrochimique. L'électrode centrale 6 est alors connectée à une borne positive d'une alimentation électrique en courant continu. L'électrode centrale 6 est avantageusement soutenue par le couvercle 7 du réacteur pour faciliter la réalisation d'un dispositif robuste et simple à mettre en oeuvre.

Dans un cas particulier, le couvercle 7 est électriquement conducteur, il est alors avantageux de raccorder électriquement le couvercle 7 avec la borne positive de l'alimentation électrique en courant continu pour polariser l'électrode centrale qui baigne dans l'électrolyte.

L'électrode centrale 6 est, par exemple, formée par un tube électriquement conducteur. Préférentiellement, il s'agit d'un tube métallique.

Le tube métallique peut être recouvert d'un revêtement sur son diamètre extérieur pour favoriser les réactions électrochimiques et sa résistance aux attaques chimiques et gazeuse.

L'électrode centrale 6 est, avantageusement, réalisée dans un matériau inattaquable par l'oxygène en milieu acide. Elle, par exemple, recouverte de nitrure de titane sur sa surface, en acier revêtu de céramiques conductrices de l'électricité. Cette céramique conductrice est non oxyde.

Comme représenté sur les figures 1 et 2, les électrodes additionnelles $E_x$ sont, avantageusement, tubulaires. Elles entourent l'électrode centrale 6.

Elles sont, avantageusement, de sections croissantes et symétriques par rapport à l'électrode centrale 6.

Préférentiellement, les électrodes additionnelles $E_x$ sont concentriques. Par concentrique, on entend que les électrodes sont concentriques ou sensiblement concentriques. Avantageusement, le centre des électrodes additionnelles $E_x$ correspond au centre de l'électrode centrale 6.

Les électrodes additionnelles $E_x$ sont emboîtées les unes dans les autres à la manière de "poupées russes".

Avantageusement, les électrodes additionnelles et l'électrode centrale 6 sont sous la forme de tube.

L'électrode $E_1$ est l'électrode additionnelle la plus proche de l'électrode centrale 6. Il s'agit de l'électrode proximale par rapport à l'électrode centrale 6. L'électrode $E_n$ est l'électrode additionnelle la plus éloignée de l'électrode centrale 6. Il s'agit de l'électrode distale par rapport à l'électrode centrale 6. La figure 1 représente, par exemple, un réacteur comprenant trois électrodes additionnelles $E_1$, $E_2$ et $E_3$, concentriques, disposées autour de l'électrode centrale. L'électrode distale est l'électrode $E_3$.

La figure 2 représente, en vue de dessus, des électrodes additionnelles $E_x$ avec x = 4. L'électrode distale est l'électrode $E_4$.

Le potentiel électrochimique des électrodes additionnelles $E_x$ est dit flottant c'est à dire que la différence de potentiel totale apportée par le générateur électrique entre l'électrode 6 et l'électrode 3 supportée par la cuve est répartie naturellement entre chacune des électrodes Ex.

De manière préférentielle, les électrodes $E_x$ ont la même morphologie, c'est-à-dire que la forme d'une des électrodes est modifiée par homothétie pour former les autres électrodes. Cette configuration permet d'avoir une distance fixe entre deux électrodes et donc une meilleure répartition des potentiels et des réactions chimiques.

Avantageusement, une configuration tubulaire permet de limiter la déformation des électrodes lors de l'électrolyse. Il est ainsi possible de diminuer sensiblement l'épaisseur des électrodes par rapport à des électrodes configurées en structures planes qui se déforment très fortement. L'utilisation d'électrodes tubulaires concentriques, plutôt que planes, permet d'obtenir un empilement plus compact avec une surface d'échange améliorée.

Cet assemblage d'électrodes permet d'obtenir de grandes surfaces de réaction dans un encombrement extrêmement réduit. Le volume du réacteur 2 peut être considérablement diminué.

De tels dispositifs permettent de stocker de plus grandes quantités d'énergie qu'un dispositif avec des électrodes planes, pour un même volume de réacteur.

Le nombre d'électrodes additionnelles dépend de la puissance électrique désirée.

Le nombre total d'électrodes de potentiel électrique flottant supportées dans la cuve est un nombre impair.

Les électrodes additionnelles $E_x$ présentent des hauteurs différentes. Préférentiellement, les électrodes additionnelles $E_x$ présentent une hauteur $H_x$, la hauteur $H_x$ des électrodes étant décroissante depuis l'électrode proximale $E_1$ jusqu'à l'électrode distale $E_n$.

La hauteur de chacune des électrodes est définie par la formule :

$$H_x = D_0 . H_1 / (D_0 + 2.P.n)$$

avec

$H_1$ la hauteur de l'électrode x
$D_0$ le diamètre de l'électrode centrale en mm,
$H_1$ la hauteur de l'électrode proximale en mm
P la distance entre deux électrodes successives, le pas entre deux électrodes successives,
n le nombre d'électrodes additionnelles.

Avantageusement, la surface active de réaction reste homogène d'un couple à l'autre, depuis le centre du réacteur, vers le corps extérieur, la surface variant dans le rapport des périmètres des éléments concentriques dont la hauteur est calculée selon l'objectif d'une iso-densité de courant.

Le pas P, la distance entre deux électrodes successives, est, avantageusement, compris entre 0,2cm et 4cm. Préférentiellement, la distance entre les électrodes est comprise entre 0,5cm et 1,5cm, ce qui permet de réduire considérablement les pertes ohmiques.

Préférentiellement, l'architecture du réacteur est configurée de manière à ce que les électrodes additionnelles $E_x$ soient bipolaires. Par bipolaire, on entend que les électrodes peuvent jouer à la fois le rôle d'anode et de cathode. L'électrode bipolaire présente deux faces : une face anodique et une face cathodique.

Pendant l'étape d'électrodéposition, le métal se dépose sur la face cathodique et l'oxygène natif se forme sur la face anodique.

Ces électrodes particulières sont, avantageusement, conçues dans des matériaux adaptés à ces conditions électrochimiques, et en particulier à la bipolarité. Les électrodes sont, par exemple, en plomb, en nickel, en titane avec, avantageusement, pour chacun desdits matériaux des revêtements électriquement conducteurs comme les céramiques non oxydes.

Les électrodes peuvent aussi être des électrodes bipolaires mixtes en oxyde de plomb et plomb, ou encore en alliage de plomb.

Préférentiellement, le stockage de l'énergie électrique est réalisé sur des électrodes bipolaires mixtes en oxyde de plomb et plomb, formant ainsi une batterie, dans une configuration cylindrique et concentrique. Ces électrodes permettent le stockage de l'énergie dans un volume très réduit ayant une grande surface d'échange.

Les électrodes bipolaires permettent la totale réversion de polarité et de fonctionnement en contre-électrodes dans la phase d'attaque chimique lorsque les polarités s'inversent lorsque le réacteur est utilisé comme générateur d'hydrogène. L'hydrogène est extrait sous pression au travers du couvercle par la sortie de gaz ou collecteur 8.

Préférentiellement, au moins l'une des faces des électrodes additionnelles est revêtue de céramiques conductrices. Les céramiques sont, avantageusement, non oxydes. Il peut s'agir de carbure de silicium (SiC), de carbure de titane (TiC), de nitrure de silicium ($Si_3N_4$), de nitrure de titane (TiN), etc.

Avantageusement, l'ensemble des électrodes additionnelles $E_x$ bipolaires forme donc un empilement compact de surfaces électrochimiques en vis-à-vis les unes aux autres dont une face se comporte en anode et l'autre face en cathode.

Les électrodes additionnelles $E_x$ sont isolées électriquement les unes des autres. Elles sont également isolées électriquement de la paroi du réacteur 2 qui forme la cathode, et de l'électrode centrale 6, qui forme l'anode. Le potentiel entre chaque électrode, appelé « potentiel flottant » s'équilibre de façon naturelle dans le bain d'électrolyte circulant entre les électrodes. Ce potentiel dépend de la différence de potentiel appliquée entre la cuve et le couvercle du réacteur, ainsi que du nombre d'électrodes additionnelles $E_x$.

Le réacteur 2 est, par exemple, une cuve. La cuve est réalisée dans un matériau électriquement conducteur. Le réacteur est, avantageusement, configuré de manière à ce que l'électrolyte circule depuis le centre du réacteur vers sa périphérie en suivant le circuit imposé par les électrodes $E_x$. De cette manière, il est plus facile de maitriser les réactions à l'intérieur du réacteur.

Avantageusement, le matériau formant la cuve, ainsi que l'épaisseur du matériau, seront choisis par l'homme du métier de manière à présenter des propriétés mécaniques lui permettant de résister à la pression d'hydrogène et à la corrosion.

La cuve est, par exemple, en aluminium. Elle est, avantageusement, protégée cathodiquement.

Avantageusement, le centre de la cuve correspond au centre de l'électrode centrale 6 et également au centre des électrodes additionnelles $E_x$. Tous ces éléments sont concentriques.

Le réacteur 2 est, préférentiellement, un réacteur fermé dans lequel circule l'électrolyte. Le réacteur est formé d'une paroi, d'un fond et d'un couvercle. La paroi est une paroi latérale. Elle est, préférentiellement, circulaire.

La paroi du réacteur forme, avantageusement, la première électrode 3. Selon un autre mode de réalisation, la première électrode pourrait être formée par une autre électrode tubulaire, disposée entre l'électrode additionnelle $E_n$ et la paroi du réacteur.

La paroi du réacteur forme avantageusement une première électrode. Elle forme la cathode du dispositif. Elle est raccordée au pole négatif de l'alimentation électrique en courant continu.

Le réacteur est fermé, dans sa partie supérieure par un couvercle 7. Avantageusement, le couvercle 7 est en forme de tronc de cône pour résister à la pression gazeuse générée à l'intérieur du réacteur.

Le couvercle 7 comporte, par exemple, une bride de serrage à sa périphérie et un joint servant à la fois à maintenir la pression à l'intérieur de la cuve et, en même temps, d'isolant électrique entre la cuve au potentiel négatif et le couvercle 7 au potentiel positif du générateur électrique extérieur.

Le couvercle 7 sert de support mécanique à l'électrode centrale 6 qui joue le rôle d'anode. Le couvercle 7 est connecté électriquement à l'anode et est porté au potentiel de la borne positive de l'alimentation extérieure.

Les gaz dégagés lors des phases de fonctionnement sont collectés via la partie supérieure du réacteur 2, qui est munie d'une sortie de gaz 8.

Des capteurs de débits des liquides et des gaz ainsi que des capteurs mesurant les conditions électriques du dispositif lors des différentes étapes du procédé sont intégrés dans le dispositif électrochimique. Le dispositif peut, en plus, comporter un calculateur permettant de réguler le débit de liquide en fonction du débit de gaz.

Selon un mode de réalisation préférentiel, le fond 9 du réacteur est électriquement isolant. Par exemple, et comme représenté sur la figure 1, une plaque électriquement isolante 10 est déposée sur le fond 9 du réacteur 2 et empêche un contact électrique entre le fond 9 du réacteur 2 et les électrodes 3. De préférence, la plaque électriquement isolante 10 permet d'assurer à la fois l'isolation électrique des électrodes à l'intérieur du réacteur mais aussi de jouer le rôle de support mécanique. La concentricité des électrodes se fait par leur emboitement dans des gorges circulaires usinées dans cet isolant électrique. Les gorges sont usinées pour définir le pas P.

Selon un mode de réalisation préférentiel, l'arrivée d'électrolyte 4 du réacteur est disposée, dans la partie supérieure de l'électrode centrale, au sommet de l'électrode centrale 6.

L'électrolyte est, par exemple, propulsé, à travers le couvercle, dans l'électrode centrale, par une pompe volumétrique, qui permet d'en régler le débit et la pression.

La sortie d'électrolyte 5 est disposée dans la partie inférieure du réacteur 2, entre l'électrode $E_n$ et la paroi du réacteur.

Dans le cas où le fond 9 de la cuve est électriquement isolant, l'électrode centrale 6 et les électrodes additionnelles $E_x$ avec x un entier pair sont séparées du fond 9 du réacteur 2, par un espace vide. Les électrodes additionnelles $E_x$ avec x un entier impair sont en contact avec le fond 9 du réacteur 2.

Dans le cas où le fond 9 de la cuve est recouvert d'une plaque électriquement isolante 10, les électrodes additionnelles $E_x$ avec x un entier pair sont séparées de la plaque électriquement isolante 10, par un espace vide, et les électrodes additionnelles $E_x$ avec x un entier impair sont en contact avec le fond 9 du réacteur 2 la plaque électriquement isolante 10.

Un chemin d'écoulement de l'électrolyte est ainsi formé, le chemin allant de l'entrée d'électrolyte 4 à la sortie d'électrolyte 5, en passant alternativement au niveau de la partie supérieure ou au niveau de la partie inférieure des électrodes additionnelles $E_x$.

Le chemin de l'électrolyte est schématiquement représenté par des flèches sur la figure 1.

L'électrolyte s'écoule, dans un premier temps, dans le tube de l'électrode centrale 6, puis il remonte le long de l'électrode additionnelle $E_1$. Par débordement, il passe au-dessus de l'électrode additionnelle $E_1$ pour atteindre la seconde interface de réaction.

L'électrolyte passe, ensuite, à travers les trous calibrés de passage au pied de l'électrode $E_2$. L'électrolyte s'écoule ainsi de façon symétrique depuis l'électrode centrale jusqu'à l'électrode $E_n$, où après un dernier débordement, il est évacué de la cuve par un orifice, formant la sortie d'électrolyte 5, disposé en pied de la cuve.

Dans ce mode de réalisation, la circulation de l'électrolyte est naturelle et gravitaire.

Cette architecture permet d'obtenir une excellente circulation des flux d'électrolyte, son renouvellement permanent au droit de chaque électrode en utilisant l'électrode centrale 6, comme moyen d'introduction de l'électrolyte dans le réacteur par le centre de celui-ci.

La hauteur décroissante des électrodes depuis l'électrode proximale $E_1$, la plus proche de l'électrode centrale, vers l'électrode distale $E_n$, la plus éloignée de l'électrode centrale, assure le débordement de l'électrolyte et permet de maîtriser les densités de courant des couples d'électrodes qui doivent être constantes.

La circulation des fluides inter-électrodes est simplifiée car elle est dirigée symétriquement depuis le centre du réacteur vers l'extérieur du réacteur, par une seule alimentation.

Une telle géométrie, entièrement symétrique, permet de délivrer une circulation pertinente des courants électriques d'une électrode à l'autre et de supprimer les courants de fuite.

La maitrise de la circulation des courants électriques, associée à une diminution des turbulences, aboutit à une meilleure homogénéité des dépôts métalliques. Avantageusement, les pertes thermiques sont diminuées et bien distribuées.

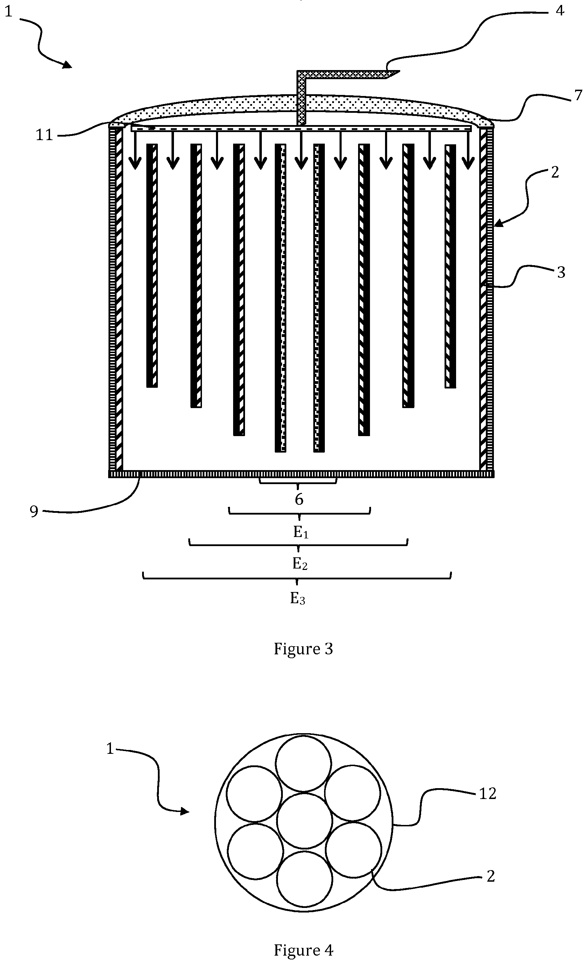

Selon un autre mode de réalisation préférentiel, et comme représenté à la figure 3, le niveau supérieur des électrodes additionnelles $E_x$ est à la même hauteur. Le niveau des électrodes peut être égalisé, grâce à des cales disposées au pied de chaque électrode. Les cales permettent de maintenir un espace entre le fond du réacteur et les électrodes additionnelles.

Un système de maintien peut aussi être disposé au niveau de la partie supérieure des électrodes.

Les cales et le système de maintien, non représentés sur la figure 3, sont électriquement isolants.

Cette configuration est particulièrement utilisée lorsque le réacteur 2 comporte des électrodes en plomb, dans le cas de stockage direct de l'électricité, et sans dégagement gazeux (réacteur travaillant à la pression atmosphérique).

Avantageusement, dans ce mode de réalisation, le fond du réacteur 9 n'a pas besoin d'être isolant. L'arrivée de l'électrolyte 4 est disposée dans la partie supérieure du réacteur 2, et la sortie d'électrolyte 5 est disposée dans la partie inférieure du réacteur 2. La sortie d'électrolyte 5 peut être formée d'un ou plusieurs orifices, disposés au niveau du fond 9 du réacteur 2.

Seule l'arrivée d'électrolyte 4 dans la cuve a été représentée.

Le dispositif électrochimique 1 comporte un injecteur 11, connecté à l'arrivée d'électrolyte, et configuré pour injecter l'électrolyte entre chaque électrode additionnelle. L'électrolyte s'écoule alors parallèlement entre chaque électrode. L'écoulement de l'électrolyte est représenté par des flèches sur la figure 3.

Le niveau d'électrolyte monte, graduellement, dans le réacteur, mettant, au fur et à mesure, les électrodes des différents couples en contact les unes des autres via ledit électrolyte.

Préférentiellement, et comme représenté à la figure 4, le réacteur 2 est disposé dans une cuve de refroidissement 12 pour permettre d'évacuer la chaleur accumulée, dans le corps de la cuve 2, et d'éviter ainsi des problèmes de surchauffe du dispositif électrochimique. Avantageusement, en cas de fuite d'hydrogène, par exemple, l'hydrogène se répartit dans l'eau de la cuve de refroidissement où il est, avantageusement, immédiatement dissous.

Le dispositif électrochimique, avec son assemblage d'électrodes bipolaires, présente, lors de son fonctionnement, une répartition idéale des courants électriques passant d'une électrode bipolaire vers une autre électrode tout en assurant un écoulement gravitaire précis et contrôlé des flux d'électrolyte de la solution chimique contenant le métal à déposer.

L'assemblage des électrodes au sein du dispositif électrochimique permet d'obtenir une meilleure compacité des surfaces actives, une compression électrochimique du gaz produit, le fonctionnement à des températures choisies à la température ambiante avec des coefficients d'échange thermique très améliorés et la récupération partielle et directe des énergies électriques induites dans les réactions chimiques de dissolution.

La morphologie des électrodes, les connexions électriques originales par le corps du réacteur avec empilage interne complémentaire d'électrodes bipolaires ayant un potentiel électrique flottant entre la cathode principale, le corps du réacteur et l'anode centrale supportée par le couvercle du réacteur permet d'obtenir un assemblage très compact et concentrique présentant une grande densité de surface active dans un volume réduit.

Le procédé réversible de stockage d'énergie électrique ou de production d'hydrogène, comprend les étapes successives suivantes :

- fournir un dispositif électrochimique 1 tel que décrit précédemment,
- introduire un électrolyte dans le dispositif électrochimique 1, l'électrolyte contenant des ions métalliques,
- relier électriquement la première électrode 3 à la borne négative d'une alimentation électrique et l'électrode centrale 6 à la borne positive de d'une alimentation électrique,
- fournir de l'énergie électrique pour réduire les ions métalliques sur les électrodes, de façon à former une pile métal électrolysable-dihydrogène.

L'électrolyte contient des ions métalliques. Il peut s'agir, par exemple, de zinc, de manganèse ou de nickel, ou encore de cadnium.

La première étape électrochimique, i.e. le stockage de l'énergie, est réalisée par électrodéposition du métal en solution sur les électrodes du dispositif électrochimique 1.

Le stockage de l'énergie électrique est réalisé sous forme d'un dépôt métallique.

Lors de l'électrodéposition du métal, de l'énergie électrique est consommée. L'électrolyte, aussi appelé liqueur, peut être additionné en permanence avec de l'eau, contenant des sulfates d'un métal.

Pendant la phase d'électrodéposition du métal sur les cathodes, i.e. sur la paroi du réacteur et sur les faces cathodiques des électrodes bipolaires emboitées l'une dans l'autre, l'oxygène se dégage aux anodes. L'oxygène est extrait du réacteur par un orifice disposé dans la partie supérieure du couvercle. Avantageusement, l'oxygène est évacué continûment.

Lors de l'électrodéposition du métal, la teneur en métal de l'électrolyte évolue, diminuant progressivement.

Par exemple, dans le cas d'un électrolyte de sulfate de zinc, la concentration massique de l'électrolyte en métal diminue depuis 150g/L, au début de la phase d'électrodéposition, jusqu'à moins de 50g/L, à la fin de la phase d'électrodéposition. En même temps, l'électrolyte s'acidifie au fur et à mesure. Préférentiellement, au début de la phase d'électrodéposition, la concentration en massique en métal est comprise entre 100g/L et 200g/L. Encore plus préférentiellement, elle est de l'ordre de 150g/L.

Préférentiellement, le dispositif 1 comprend un réservoir d'électrolyte connecté à l'arrivée d'électrolyte 4 et à la sortie d'électrolyte 5 du réacteur 2, de manière à former un circuit fermé. L'électrolyte, utilisé pour former la pile métal électrolysable-dihydrogène, est réutilisé pour la phase de fonctionnement de ladite pile.

Lors de la phase d'électrodéposition, l'électrolyte est stocké progressivement dans le réservoir de stockage. Le réservoir sert ensuite de réserve d'alimentation pour la phase de production d'énergie électrique.

Après la phase d'électrodéposition, l'électrolyte est, avantageusement, retiré du réacteur 2. Par cette vidange de l'électrolyte, il n'y a plus aucun passage de courant possible et le circuit est ouvert.

Le dépôt de métal réalisé est stable lorsque l'électrolyte est vidé de la cuve et n'est plus en contact dudit métal déposé. Le dépôt se conserve très longtemps sans s'oxyder, conservant intrinsèquement l'énergie électrique qu'il a consommée lors de son électrodéposition.

Le procédé comporte, après la formation de la pile métal électrolysable-dihydrogène, une phase de fonctionnement de ladite pile, la phase de fonctionnement comprenant la dissolution du métal, précédemment déposé, de manière à produire de l'énergie électrique et du dihydrogène.

L'électrolyte, utilisé pour former la pile métal électrolysable-dihydrogène, est réutilisé pour la phase de fonctionnement de ladite pile.

Selon un mode de réalisation préférentiel, après la formation de la pile métal électrolysable-dihydrogène, l'électrolyte est vidé du réacteur 2. Ceci permet de conserver les électrodes pendant de longues durées. Avantageusement, l'électrolyte est toujours vidé du réacteur dans les phases intermédiaires et dans la phase de repos des équipements, lorsque les équipements sont hors courant.

L'électrolyte est réintroduit lors de la phase de fonctionnement de ladite pile pour la production de dihydrogène.

Lors de la phase de fonctionnement de la pile métal électrolysable-dihydrogène, i.e. lors de la dissolution du métal, l'énergie électrique est récupérée. La première électrode 3 et l'électrode centrale 6 sont reliées à un système de récupération d'énergie.

Le réacteur fournit de l'hydrogène, sous pression. La pression est, par exemple, de l'ordre de 80bars.

Le dihydrogène, formé lors de la phase de fonctionnement de la pile métal électrolysable-dihydrogène, est extrait sous pression par la sortie de gaz 8.

Lors de la dissolution contrôlée dudit métal déposé sur les électrodes dans le réacteur ayant servi à la déposition, l'électrolyte circule, avantageusement, de façon contrôlée entre les électrodes. L'électrolyte circule par débordement gravitaire contrôlé en débit. L'électrolyte a été formé, dans l'opération précédente, circulant en boucle fermée et dont la teneur en acide aura évolué et n'aura plus la même stœchiométrie comparée à la teneur initiale en sulfate, cette dissolution produisant sur la contre-électrode raccordée électriquement un dégagement d'hydrogène, le réacteur étant devenu un générateur électrique par effet de piles.

Avantageusement, l'électrolyte est introduit dans le réacteur, depuis le réservoir de stockage, à une pression correspondante par une pompe.

Le dispositif électrochimique peut comprendre une soupape tarée spécifiquement, ou régulée par un automate extérieur, à la pression requise. La soupape règle la pression sur la sortie 5 de la cuve.

La teneur en acide est, au début, de l'attaque chimique située entre 50g/L et 200g/L.

Au fur et à mesure de l'attaque chimique du métal, le métal est remis en solution dans l'électrolyte. Dans le cas du zinc, la solution de sulfate de zinc, est régénérée pour une nouvelle utilisation future, l'électrolyte circulant en boucle fermée.

La circulation contrôlée de l'électrolyte permet, selon la configuration choisie, soit le stockage direct de l'énergie électrique, soit la transformation directe de l'énergie électrique en hydrogène sous pression, lors d'une seconde étape électrochimique.

Le réacteur se comporte en cathode, lors de la phase de stockage, et il sert aussi de générateur gazeux sous pression, lors de la phase de production d'énergie électrique et de dihydrogène.

Selon un mode de réalisation préférentiel, plusieurs réacteurs sont couplés électriquement. Les réacteurs peuvent être couplés en série et en parallèle. Préférentiellement, le dispositif comprend au moins un deuxième réacteur, les deux réacteurs étant montés en série, les réacteurs étant connectés électriquement.

Les deux réacteurs sont en communication fluidique : le deuxième réacteur est disposé entre le premier réacteur et le réservoir d'électrolyte, la sortie d'électrolyte du premier réacteur étant connectée à l'entrée d'électrolyte du deuxième réacteur, et la sortie d'électrolyte du deuxième réacteur étant connectée au réservoir d'électrolyte.

Par exemple, et comme représenté à la figure 4, sept réacteurs ont été assemblés en série dans une cuve de refroidissement 12.

Les réacteurs sont symétriques électriquement. Chaque réacteur comprend 19 électrodes internes, i.e. 20 couples électrochimiques. Chaque réacteur peut fournir 60 volts.

Les électrodes sont des électrodes mixtes en plomb et titane revêtu de nitrures complexes.

Chaque ensemble d'électrodes présente une surface active comprise entre 20 et 25m$^2$ pour un diamètre extérieur de réacteur inférieur à 1m. Chaque réacteur est traversé par un courant de 500 ampères.

Lors des essais réalisés, en présence de sulfate de zinc, et lors de l'étape d'électrodéposition, entre 15kg et 20kg de zinc ont été déposés par réacteur et par heure sous courant.

Lors de la seconde étape, dans la configuration de production de dihydrogène, un débit de 1000 à 1500 Nm$^3$/h (pour normo-mètre cube par heure) d'hydrogène a été obtenu.

La cuve de refroidissement 12 a permis de refroidir les sept réacteurs jusqu'à une température de fonctionnement comprise entre 30°C et 70°C. Avantageusement, les connexions électriques pour le fonctionnement du dispositif électrochimique sont très simples à mettre en place.

Le réacteur est alimenté par un générateur en courant continu, lors de la phase de stockage d'énergie, et le réacteur se comporte lui-même en générateur contrôlé lorsqu'il génère de l'hydrogène.

L'anode centrale est fixée fermement par sa connexion électrique au couvercle, alors que le corps du réacteur, formant la cathode, est connecté à la borne négative du générateur lors de l'électrodéposition du métal.

Lors de l'attaque chimique, le réacteur joue le rôle de générateur électrique. Il est alors raccordé électriquement à un ou plusieurs systèmes de récupération d'énergie.

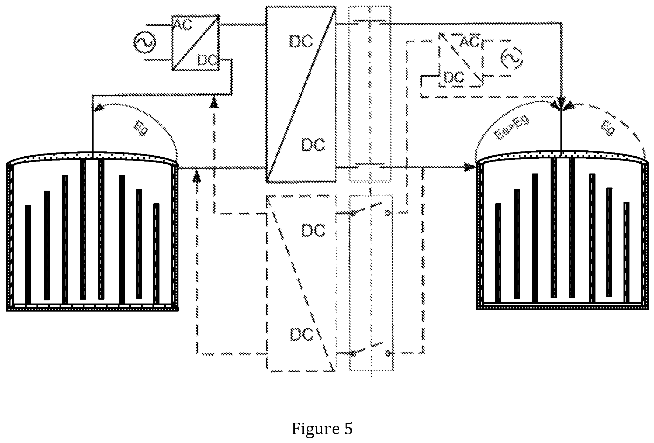

La figure 5 représente un dispositif électrochimique comprenant deux réacteurs couplés électriquement.

Cette configuration permet d'utiliser l'effet de générateur électrique en utilisant l'énergie produite dans le réacteur en phase d'électrodéposition du métal, grâce à des couplages avec des convertisseurs DC-DC BOOST. Les couplages permettent l'inversion des sens des courants électriques.

Les réacteurs sont pendant une période donnée récepteur d'énergie électrique. Il s'agit du cas de la phase d'électrodéposition. Ils produisent alors de l'oxygène. Une alimentation extérieure en courant continu fournit l'énergie nécessaire à l'électrodéposition. Ce courant continu peut aussi être pulsé.

Les réacteurs sont ensuite générateurs d'énergie électrique dans la phase d'attaque chimique du métal déposé. Ils génèrent alors un courant électrique, par effet pile. Le courant est utilisé au travers du montage de convertisseur électronique inversable.

Le procédé permet de stocker de l'énergie électrique disponible, par exemple, lors des heures creuses et de restituer l'énergie électrique stockée avec un rendement élevé, par exemple lors des heures pleines, la restitution d'énergie électrique étant accompagnée de production d'hydrogène.

**Revendications**

1. Dispositif électrochimique (1), configuré pour le stockage de l'énergie électrique, et la production massive d'hydrogène comprenant :

- un réacteur (2),

la paroi du réacteur (2) étant configurée pour former une première électrode (3),

le réacteur (2) étant pourvu d'une entrée d'électrolyte (4) et d'une sortie d'électrolyte (5),

- une électrode centrale (6) disposée au centre du réacteur (2),

- des électrodes additionnelles $E_x$, avec x un entier allant de 1 à n,

les électrodes additionnelles $E_x$ étant tubulaires et disposées autour de l'électrode centrale (6).

2. Dispositif électrochimique (1) selon la revendication 1, **caractérisé en ce que** les électrodes additionnelles $E_x$ sont munies d'une face anodique et d'une cathodique.

3. Dispositif électrochimique selon la revendication 2, **caractérisé en ce qu'**au moins l'une des faces des électrodes additionnelles est revêtue de céramiques conductrices.

4. Dispositif électrochimique selon l'une quelconque des revendications 1 à 3, **caractérisé en ce que** les électrodes additionnelles $E_x$ présentent une hauteur $H_x$, la hauteur $H_x$ des électrodes étant décroissante depuis l'électrode proximale $E_1$ jusqu'à l'électrode distale $E_n$.

5. Dispositif électrochimique (1) selon la revendication 4, **caractérisé en ce que** la hauteur $H_x$ des électrodes est définie par $H_x = D_0.H_1/(D_0+2.P.n)$ avec

$H_x$ la hauteur de l'électrode x
$D_0$ le diamètre de l'électrode centrale en mm,
$H_1$ la hauteur de l'électrode proximale en mm
P la distance entre deux électrodes successives,
n le nombre d'électrodes additionnelles $E_x$.

6. Dispositif électrochimique (1) selon l'une quelconque des revendications 1 à 5, **caractérisé en ce que** le fond (9) du réacteur (2) est électriquement isolant.

7. Dispositif électrochimique (1) selon l'une quelconque des revendications 1 à 6, **caractérisé en ce que** :

- l'arrivée de l'électrolyte (4) est disposée dans la partie supérieure de l'électrode centrale (6),
- la sortie d'électrolyte (5) est disposée dans la partie inférieure du réacteur (2), entre l'électrode $E_n$ et la paroi du réacteur (2),
- l'électrode centrale (6) et les électrodes additionnelles $E_x$ avec x un entier pair sont séparées du fond du réacteur (2) par un espace,
- les électrodes additionnelles $E_x$ avec x un entier impair sont en contact avec le fond du réacteur (2),

de manière à former un chemin d'écoulement de l'électrolyte, le chemin allant de l'entrée d'électrolyte (4) à la sortie d'électrolyte (5), en passant alternativement au niveau de la partie supérieure des électrodes $E_x$ avec x un entier impair et au niveau de la partie inférieure des électrodes $E_x$ avec x un entier pair.

8. Dispositif électrochimique (1) selon l'une quelconque des revendications 1 à 6, **caractérisé en ce que** :

- l'arrivée de l'électrolyte (4) est disposée dans la partie supérieure du réacteur (2),
- la sortie d'électrolyte (5) est disposée dans la partie inférieure du réacteur (2),
- le dispositif électrochimique (1) comporte un injecteur (11) configuré pour injecter l'électrolyte entre chaque électrode additionnelle $E_x$, les électrodes additionnelles $E_x$ étant séparées du fond du réacteur (2) par un espace.

9. Dispositif électrochimique (1) selon l'une quelconque des revendications 1 à 8, **caractérisé en ce que** les électrodes additionnelles $E_x$ sont isolées électriquement les unes autres et **en ce qu'**elles sont isolées électriquement de la première électrode (3) et de l'électrode centrale (6).

10. Dispositif électrochimique (1) selon l'une quelconque des revendications 1 à 9, **caractérisé en ce que** le réacteur (2) est disposé dans une cuve de refroidissement (12).

11. Dispositif électrochimique (1) selon l'une quelconque des revendications 1 à 10, **caractérisé en ce que** le dispositif (1) comprend un réservoir d'électrolyte connecté à l'arrivée d'électrolyte (4) et à la sortie d'électrolyte (5) du réacteur (2), de manière à former un circuit fermé.

12. Dispositif électrochimique (1) selon l'une quelconque des revendications 1 à 11, **caractérisé en ce que** le dispositif comprend au moins un deuxième réacteur, les deux réacteurs étant montés en série, les réacteurs étant connectés électriquement, et **en ce que** le deuxième réacteur est disposé entre le premier réacteur et le réservoir d'électrolyte, la sortie d'électrolyte du premier réacteur étant connectée à l'entrée d'électrolyte du deuxième réacteur, et la sortie d'électrolyte du deuxième réacteur étant connectée au réservoir d'électrolyte.

13. Dispositif électrochimique (1) selon l'une quelconque des revendications 1 à 12, **caractérisé en ce**

**que** la première électrode (3) est raccordée électriquement à la borne négative d'une alimentation électrique et **en ce que** l'électrode centrale (6) est raccordée à la borne positive de l'alimentation électrique.

14. Dispositif électrochimique (1) selon l'une quelconque des revendications 1 à 12, **caractérisé en ce que** la première électrode (3) et l'électrode centrale (6) sont raccordées à un système de récupération d'énergie.

15. Procédé de stockage d'énergie électrique, comprenant les étapes successives suivantes :

    - fournir un dispositif électrochimique (1) selon l'une quelconque des revendications 1 à 14,
    - introduire un électrolyte dans le dispositif électrochimique (1), l'électrolyte contenant des ions métalliques,
    - relier électriquement la première électrode (3) à la borne négative d'une alimentation électrique et l'électrode centrale (6) à la borne positive de d'une alimentation électrique,
    - fournir de l'énergie électrique pour réduire les ions métalliques sur les électrodes du dispositif électrochimique (1), de façon à former une pile métal électrolysable-dihydrogène.

16. Procédé selon la revendication 15, **caractérisé en ce que** le procédé comporte, après la formation de la pile métal électrolysable-dihydrogène, une phase de fonctionnement de ladite pile, la phase de fonctionnement comprenant la dissolution du métal déposé de manière à produire de l'énergie électrique et du dihydrogène.

17. Procédé selon la revendication 16, **caractérisé en ce que**, lors de la dissolution du métal, la première électrode (3) et l'électrode centrale (6) sont reliées à un système de récupération d'énergie.

18. Procédé selon l'une des revendications 16 et 17, **caractérisé en ce que** le dihydrogène, formé lors de la phase de fonctionnement de la pile métal électrolysable-dihydrogène, est extrait sous pression par la sortie de gaz (8).

19. Procédé selon l'une des revendications 15 et 18, **caractérisé en ce que** l'électrolyte, utilisé pour former la pile métal électrolysable-dihydrogène, est réutilisé pour la phase de fonctionnement de ladite pile.

20. Procédé selon l'une quelconque des revendications 15 à 19, **caractérisé en ce que**, après la formation de la pile métal électrolysable-dihydrogène, l'électrolyte est vidé du réacteur (2).

**Patentansprüche**

1. Elektrochemische Vorrichtung (1), die zum Speichern elektrischer Energie und zur Massenproduktion von Wasserstoff vorgesehen ist und umfasst:

    - einen Reaktor (2),
    wobei die Wand des Reaktors (2) so vorgesehen ist, dass sie eine erste Elektrode (3) bildet,
    wobei der Reaktor (2) mit einem Elektrolyteingang (4) und einem Elektrolytausgang (5) versehen ist,
    - wobei eine mittlere Elektrode (6) in der Mitte des Reaktors (2) angeordnet ist,
    - zusätzliche Elektroden $E_x$, wobei x eine ganze Zahl von 1 bis n ist,

    wobei die zusätzlichen Elektroden $E_x$ röhrenförmig und um die mittlere Elektrode (6) herum angeordnet sind.

2. Elektrochemische Vorrichtung (1) nach Anspruch 1, **dadurch gekennzeichnet, dass** die zusätzlichen Elektroden $E_x$ mit einer Anoden- und einer Kathodenseite versehen sind.

3. Elektrochemische Vorrichtung nach Anspruch 2, **dadurch gekennzeichnet, dass** mindestens eine der zusätzlichen Elektroden mit leitenden Keramikmaterialien beschichtet ist.

4. Elektrochemische Vorrichtung nach einem der Ansprüche 1 bis 3, **dadurch gekennzeichnet, dass** die zusätzlichen Elektroden $E_x$ eine Höhe $H_x$ aufweisen, wobei die Höhe $H_x$ der Elektroden abnehmend ist von der proximalen Elektrode $E_1$ bis zur distalen Elektrode $E_n$.

5. Elektrochemische Vorrichtung (1) nach Anspruch 4, **dadurch gekennzeichnet, dass** die Höhe $H_x$ der Elektroden definiert ist durch $H_x = D_0 . H_1 / (D_0 + 2.P.n)$ wobei

    $H_x$ die Höhe der Elektrode x ist,
    $D_0$ der Durchmesser der mittleren Elektrode in mm ist,
    $H_1$ die Höhe der proximalen Elektrode in mm ist,
    P der Abstand zwischen zwei aufeinanderfolgenden Elektroden ist,
    n die Anzahl zusätzlicher Elektroden $E_x$ ist.

6. Elektrochemische Vorrichtung nach einem der Ansprüche 1 bis 5, **dadurch gekennzeichnet, dass** der Boden (9) des Reaktors (2) elektrisch isolierend ist.

7. Elektrochemische Vorrichtung nach einem der Ansprüche 1 bis 6, **dadurch gekennzeichnet, dass**

- der Elektrolyteingang (4) im oberen Bereich der mittleren Elektrode (6) angeordnet ist,
- der Elektrolytausgang (5) im unteren Bereich des Reaktors (2) zwischen der Elektrode $E_n$ und der Wand des Reaktors (2) angeordnet ist,
- die mittlere Elektrode (6) und die zusätzlichen Elektroden $E_x$ - wobei x eine gerade ganze Zahl ist - durch einen Zwischenraum vom Boden des Reaktors (2) getrennt sind,
- die zusätzlichen Elektroden $E_x$ - wobei x eine ungerade ganze Zahl ist - Kontakt mit dem Boden des Reaktors (2) haben,

sodass ein Strömungsweg für den Elektrolyten gebildet wird, der sich vom Elektrolyteingang (4) bis zum Elektrolytausgang (5) erstreckt, indem er abwechselnd in Höhe des oberen Bereichs der Elektroden $E_x$ - wobei x eine ungerade ganze Zahl ist - und in Höhe des unteren Bereichs der Elektroden $E_x$ - wobei x eine gerade ganze Zahl ist - verläuft.

8. Elektrochemische Vorrichtung nach einem der Ansprüche 1 bis 6, **dadurch gekennzeichnet, dass**

   - der Elektrolyteingang (4) im oberen Bereich des Reaktors (2) angeordnet ist,
   - der Elektrolytausgang (5) im unteren Bereich des Reaktors (2) angeordnet ist,
   - die elektrochemische Vorrichtung (1) eine Einspritzvorrichtung (11) umfasst, die so vorgesehen ist, dass sie den Elektrolyten zwischen jede zusätzliche Elektrode $E_x$ einspritzt, wobei die zusätzlichen Elektroden $E_x$ vom Boden des Reaktors (2) durch einen Zwischenraum getrennt sind.

9. Elektrochemische Vorrichtung nach einem der Ansprüche 1 bis 8, **dadurch gekennzeichnet, dass** die zusätzlichen Elektroden $E_x$ voneinander elektrisch isoliert und von der ersten Elektrode (3) und der mittleren Elektrode (6) elektrisch isoliert sind.

10. Elektrochemische Vorrichtung nach einem der Ansprüche 1 bis 9, **dadurch gekennzeichnet, dass** der Reaktor (2) in einem Abkühltank (12) angeordnet ist.

11. Elektrochemische Vorrichtung nach einem der Ansprüche 1 bis 10, **dadurch gekennzeichnet, dass** die Vorrichtung (1) einen Elektrolytvorratsbehälter umfasst, der an den Elektroyteingang (4) und den Elektrolytausgang (5) des Reaktors (2) angeschlossen ist, um so einen geschlossenen Kreislauf zu bilden.

12. Elektrochemische Vorrichtung nach einem der Ansprüche 1 bis 11, **dadurch gekennzeichnet, dass** die Vorrichtung mindestens einen zweiten Reaktor umfasst, wobei die beiden Reaktoren in Serie montiert sind, die Reaktoren elektrisch verbunden sind, sowie dadurch, dass der zweite Reaktor zwischen dem ersten Reaktor und dem Elektrolytvorratsbehälter angeordnet ist, wobei der Elektrolytausgang des ersten Reaktors an den Elektrolyteingang des zweiten Reaktors und der Elektrolytausgang des zweiten Reaktors an den Elektrolytvorratsbehälter angeschlossen ist.

13. Elektrochemische Vorrichtung nach einem der Ansprüche 1 bis 12, **dadurch gekennzeichnet, dass** die erste Elektrode (3) elektrisch an den Minuspol einer Stromversorgung gelegt ist, und dadurch, dass die mittlere Elektrode (6) an den Pluspol der Stromversorgung gelegt ist.

14. Elektrochemische Vorrichtung nach einem der Ansprüche 1 bis 12, **dadurch gekennzeichnet, dass** die erste Elektrode (3) und die mittlere Elektrode (6) an ein Energierückgewinnungssystem angeschlossen sind.

15. Verfahren zum Speichern elektrischer Energie, das folgende aufeinanderfolgende Schritte umfasst:

    - Herstellung einer elektrochemischen Vorrichtung nach einem der Ansprüche 1 bis 14,
    - Einleiten eines Elektrolyten in die elektrochemische Vorrichtung (1), wobei der Elektrolyt Metallionen enthält,
    - elektrisches Anlegen der ersten Elektrode (3) an den Minuspol einer Stromversorgung und der mittleren Elektrode (6) an den Pluspol einer Stromversorgung,
    - Einleiten von Strom zur Reduktion der Metallionen an den Elektroden der elektrochemischen Vorrichtung (1), damit eine Dihydrogen - elektrolysierbares Metall-Zelle entsteht.

16. Verfahren nach Anspruch 15, **dadurch gekennzeichnet, dass** das Verfahren nach Bildung der damit eine Dihydrogen - elektrolysierbares Metall-Zelle eine Betriebsphase der genannten Zelle umfasst, wobei die Betriebsphase die Auflösung des abgeschiedenen Metalls umfasst, um elektrische Energie und Dihydrogen herzustellen.

17. Verfahren nach Anspruch 16, **dadurch gekennzeichnet, dass** bei der Auflösung des Metalls die erste Elektrode (3) und die mittlere Elektrode (6) an ein Energierückgewinnungssystem angeschlossen sind.

18. Verfahren nach einem der Ansprüche 16 und 17, **dadurch gekennzeichnet, dass** das während der Betriebsphase der damit eine Dihydrogen - elektrolysierbares Metall-Zelle gebildete Dihydrogen unter Druck durch den Gasaustritt (8) ausgetragen wird.

19. Verfahren nach einem der Ansprüche 15 und 18, **dadurch gekennzeichnet, dass** der zur Herstellung der damit eine Dihydrogen - elektrolysierbares Metall-Zelle verwendete Elektrolyt für die Betriebsphase der genannten Zelle wiederverwendet wird.

20. Verfahren nach einem der Ansprüche 15 bis 19, **dadurch gekennzeichnet, dass** der Elektrolyt nach Herstellung der damit eine Dihydrogen - elektrolysierbares Metall-Zelle aus dem Reaktor (2) abgelassen wird.

**Claims**

1. Electrochemical device (1), configured for electric power storage and large-scale hydrogen production comprising:

    - a reactor (2),
    the wall of the reactor (2) being configured to form a first electrode (3),
    the reactor (2) being provided with an electrolyte inlet (4) and an electrolyte outlet (5),
    - a central electrode (6) located in the centre of the reactor (2),
    - additional electrodes $E_x$, with x an integer ranging from 1 to n,

    the additional electrodes $E_x$ being tubular and arranged around the central electrode (6).

2. Electrochemical device (1) according to claim 1, **characterized in that** the additional electrodes $E_x$ are provided with an anodic surface and a cathodic surface.

3. Electrochemical device according to claim 2, **characterized in that** at least one of the surfaces of the additional electrodes is coated with conductive ceramics.

4. Electrochemical device according to any one of claims 1 to 3, **characterized in that** the additional electrodes $E_x$ present a height $H_x$, the height $H_x$ of the electrodes being decreasing from the proximal electrode $E_1$ to the distal electrode $E_n$.

5. Electrochemical device (1) according to claim 4, **characterized in that** the height $H_x$ of the electrodes is defined by $H_x = D_0.H_1/(D_0+2.P.n)$ with

    $H_x$ the height of the electrode x
    $D_0$ the diameter of the central electrode in mm
    $H_1$ the height of the proximal electrode in mm
    $P$ the distance between two successive electrodes
n the number of additional electrodes $E_x$.

6. Electrochemical device (1) according to any one of claims 1 to 5, **characterized in that** the bottom (9) of the reactor (2) is electrically insulating.

7. Electrochemical device (1) according to any one of claims 1 to 6, **characterized in that**:

    - the electrolyte inlet (4) is located in the top part of the central electrode (6),
    - the electrolyte outlet (5) is located in the bottom part of the reactor (2), between the electrode $E_n$ and the wall of the reactor (2),
    - the central electrode (6) and the additional electrodes $E_x$ with x an even integer are separated from the bottom of the reactor (2) by a space,
    - the additional electrodes $E_x$ with x an odd integer are in contact with the bottom of the reactor (2),

    so as to form a flow path of the electrolyte, the path running from the electrolyte inlet (4) to the electrolyte outlet (5), passing alternately at the level of the top part of the electrodes $E_x$ with x an odd integer and at the level of the bottom part of the electrodes $E_x$ with x an even integer.

8. Electrochemical device (1) according to any one of claims 1 to 6, **characterized in that**:

    - the electrolyte inlet (4) is located in the top part of the reactor (2),
    - the electrolyte outlet (5) is located in the bottom part of the reactor (2),
    - the electrochemical device (1) comprises an injector (11) configured to inject the electrolyte between each additional electrode $E_x$, the additional electrodes $E_x$ being separated from the bottom of the reactor (2) by a gap.

9. Electrochemical device (1) according to any one of claims 1 to 8, **characterized in that** the additional electrodes $E_x$ are electrically insulated from one another and **in that** they are electrically insulated from the first electrode (3) and from the central electrode (6).

10. Electrochemical device (1) according to any one of claims 1 to 9, **characterized in that** the reactor (2) is arranged in a cooling tank (12).

11. Electrochemical device (1) according to any one of claims 1 to 10, **characterized in that** the device (1) comprises an electrolyte tank connected to the electrolyte inlet (4) and to the electrolyte outlet (5) of the reactor (2) so as to form a closed circuit.

12. Electrochemical device (1) according to any one of claims 1 to 11, **characterized in that** the device comprises at least a second reactor, the two reactors being mounted in series, the reactors being electrically connected, and **in that** the second reactor is located between the first reactor and the electrolyte tank, the electrolyte outlet of the first reactor being connected to the electrolyte inlet of the second reactor, and the electrolyte outlet of the second reactor being connected to the electrolyte tank.

13. Electrochemical device (1) according to any one of claims 1 to 12, **characterized in that** the first electrode (3) is electrically connected to the negative terminal of an electric power supply and **in that** the central electrode (6) is connected to the positive terminal of the electric power supply.

14. Electrochemical device (1) according to any one of claims 1 to 12, **characterized in that** the first electrode (3) and the central electrode (6) are connected to an energy recovery system.

15. Electric power storage method comprising the following successive steps:

    - providing an electrochemical device (1) according to any one of claims 1 to 14,
    - inlet of an electrolyte into the electrochemical device (1), the electrolyte containing metallic ions,
    - electrically connecting the first electrode (3) to the negative terminal of an electric power supply and the central electrode (6) to the positive terminal of an electric power supply,
    - providing electric power to reduce the metallic ions on the electrodes of the electrochemical device (1) so as to form an electrolyzable metal-dihydrogen battery.

16. Method according to claim 15, **characterized in that**, after formation of the electrolyzable metal-dihydrogen battery, the method comprises an operating phase of said battery, the operating phase comprising dissolution of the deposited metal so as to produce electric power and dihydrogen.

17. Method according to claim 16, **characterized in that**, when dissolution of the metal takes place, the first electrode (3) and central electrode (6) are connected to an energy recovery system.

18. Method according to one of claims 16 and 17, **characterized in that** the dihydrogen, formed in the operating phase of the electrolyzable metal-dihydrogen battery, is extracted under pressure via the gas outlet (8).

19. Method according to one of claims 15 and 18, **characterized in that** the electrolyte, used to form the electrolyzable metal-dihydrogen battery, is reused for the operating phase of said battery.

20. Method according to any one of claims 15 to 19, **characterized in that**, after formation of the electrolyzable metal-dihydrogen battery, the electrolyte is drained out of the reactor (2).

Figure 1

Figure 2

Figure 3

Figure 4

Figure 5

**EP 3 183 770 B1**

## RÉFÉRENCES CITÉES DANS LA DESCRIPTION

**Documents brevets cités dans la description**

- WO 2011015723 A